# EUROPÄISCHE PATENTSCHRIFT

(11) **EP 0 897 497 B1**
(45) Veröffentlichungstag und Bekanntmachung des Hinweises auf die Patenterteilung: **20.10.1999**
(21) Anmeldenummer: 97922988.7
(22) Anmeldetag: 07.05.1997
(51) Int. Cl.: F16H 61/02

(54) **VERFAHREN ZUR BEWERTUNG EINES STRASSENVERLAUFES BEI EINEM AUTOMATGETRIEBE**
PROCESS FOR EVALUATING A ROAD LAYOUT FOR AN AUTOMATIC GEARBOX
PROCEDE D'EVALUATION D'UN TRACE DE ROUTE POUR UNE BOITE AUTOMATIQUE

(30) Priorität: 10.05.1996 DE 19618804
(43) Veröffentlichungstag der Anmeldung: 24.02.1999
(73) Patentinhaber: ZF FRIEDRICHSHAFEN Aktiengesellschaft, 88038 Friedrichshafen (DE); ROBERT BOSCH GMBH, 70442 Stuttgart (DE)
(72) Erfinder: HENNEKEN, Markus, D-88079 Kressbronn (DE); SCHMID, Wolfgang, D-88085 Langenargen (DE); POLJANSEK, Marko, D-72768 Reutlingen (DE)
(74) Vertreter: Zietlow, Karl-Peter
(86) Internationale Anmeldenummer: EP9702317
(87) Internationale Veröffentlichungsnummer: WO9743567

(56) Entgegenhaltungen:
- EP-A- 0 622 570
- DE-A- 3 922 051
- DE-A- 4 136 613
- DE-A- 4 312 717

## Beschreibung

Die Erfindung betrifft ein Verfahren zur Bewertung eines Straßenverlaufes bei dem Automatgetriebe eines Fahrzeuges mittels eines elektronischen Getriebesteuergerätes mit einer Berechnungseinheit, einem Micro-Controller, einer Speichereinrichtung und einer Steuerungseinrichtung zur Ansteuerung eines hydraulischen Getriebesteuergerätes.

Aus der Praxis sind für elektro-hydraulisch gesteuerte Pkw-Automatgetriebe sogenannte "intelligente" Schaltprogramme bekannt.

Ein derartiges intelligentes Schaltprogramm ist beispielsweise in der DE-OS 39 22 051 beschrieben, wobei unter "intelligent" verstanden wird, daß der Fahrer eines Fahrzeuges keinen Wählknopf zur Einstellung eines bestimmten Schaltbereiches, wie z. B. für sportliche Fahrt oder ökonomische Fahrt, betätigen muß, da ein elektronisches Getriebesteuergerät aufgrund von Eingangsgrößen auf das Verhalten des Fahrers und damit des Fahrertyps schließt. Als Eingangsgrößen dienen hierbei beispielsweise das Signal einer Drosselklappe, die Drehzahl einer Brennkraftmaschine und die aus den Raddrehzahlen ermittelte Längs- und Querbeschleunigung. Gemäß dem Stand der Technik wird aus den Eingangsgrößen eine Fahraktivität bzw. ein Fahrertyp ermittelt. Aufgrund des Fahrertyps wird dann eine entsprechende Schaltkennlinie aus einer Mehrzahl von Schaltkennlinien ausgewählt. So wird beispielsweise für einen ruhigen Fahrertyp eine Schaltlinie mit niederen Schaltpunkten und für einen sportlichen Fahrertyp eine Schaltkennlinie mit hohen Schaltpunkten ausgewählt.

Da das Fahrverhalten eines Fahrers in verschiedenen Fahrsituationen unterschiedlich sein kann, würde z. B. ein ansonsten sportlicher Fahrer, der jedoch in bestimmten Fahrsituationen langsamere Fahrt bevorzugt, eine generelle Einstufung seines Fahrverhaltens als sportlich in diesen Fahrsituationen als störend empfinden. Das Schaltprogramm muß daher flexibel auf verschiedene Fahrsituationen reagieren können. Eine derartige Fahrsituation ist die Anzahl der durchfahrenen Kurven.

Aus der DE-PS 41 20 603 ist ein Verfahren bezüglich einer Kurvenfahrt bekannt, bei dem eine Hochschaltung nur dann zugelassen wird, wenn die Querbeschleunigung unterhalb eines Grenzwertes liegt.

Dieses aus dem Stand der Technik bekannte Verfahren weist somit den Nachteil auf, daß bei Kurvenfahrten die Art und Weise, wie eine Kurve durchfahren wird bzw. wie kurvig der Straßenverlauf ist, nicht bewertet wird.

Es ist daher Aufgabe der vorliegenden Erfindung, ein Verfahren bereit zu stellen, durch welches die Bewertung eines Fahrertyps bzw. der Fahraktivität in Abhängigkeit der durchfahrenen Kurven erfolgt.

Diese Aufgabe wird ausgehend von dem Oberbegriff des Anspruches 1 durch die im kennzeichnenden Teil des Anspruches 1 aufgeführten Verfahrensschritte gelöst.

Das erfindungsgemäße Verfahren weist den Vorteil auf, daß es auf einfache Art und Weise die Art des Straßenverlaufes bei der Bewertung eines Fahrertyps miteinbezieht. Dadurch ist es vorteilhafterweise möglich, daß der bei dem Verfahren herangezogene Fahrertyp-Istwert ständig aktualisiert wird.

Weitere Vorteile der Erfindung ergeben sich aus den Unteransprüchen und der nachfolgenden, auf die prinzipmäßige Zeichnung Bezug nehmenden Beschreibung der Erfindung. Es zeigt:
- Fig. 1: ein stark schematisiertes Systemschaubild eines Automatikgetriebes;
- Fig. 2: einen Programmablaufplan zur Bewertung eines Straßenverlaufes;
- Fig. 3: ein Kennfeld zur Ermittlung eines Inkrementes (INKR_0) und
- Fig. 4: eine schematische Darstellung eines Zählers.

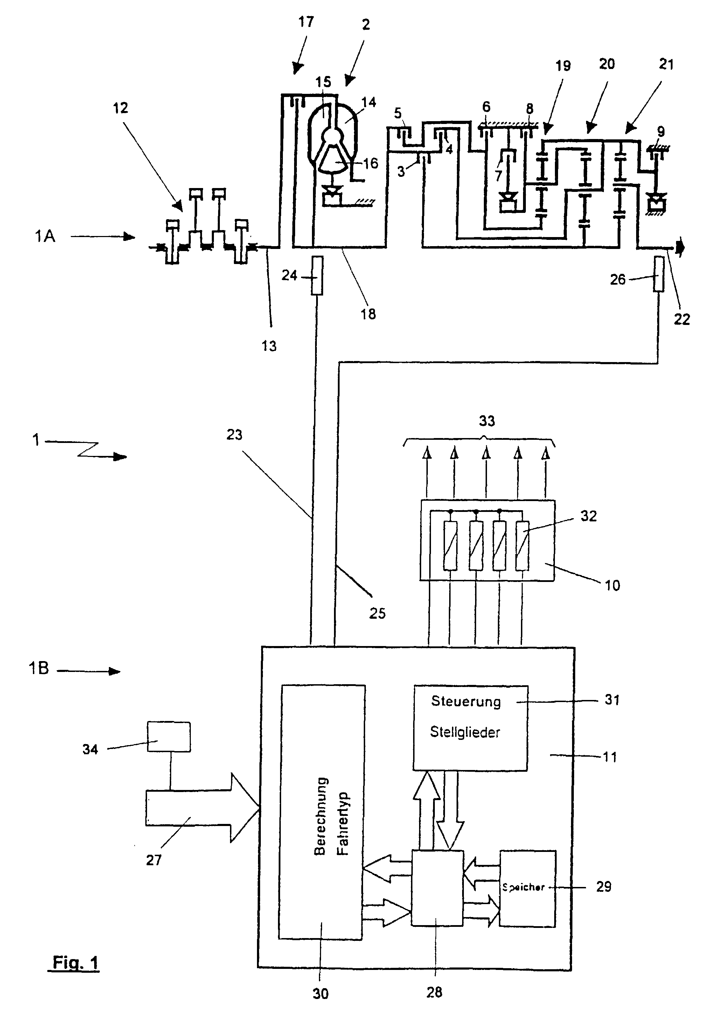

Bezug nehmend auf Fig. 1 ist ein stark schematisiertes Systemschaubild eines Automatgetriebes 1 dargestellt. Das Automatgetriebe 1 besteht aus einem mechanischen Teil 1A mit einem hydrodynamischen Wandler 2 und als Kupplungen bzw. Bremsen ausgebildeten Schaltelementen 3 bis 9 und aus einem Steuerungsteil 1B mit einem hydraulischen Steuergerät 10 und einem elektronischen Steuergerät 11. Das Automatgetriebe 1 wird von einer Antriebseinheit 12, welche zweckmäßiger Weise als Brennkraftmaschine ausgebildet ist, über eine Antriebswelle 13 angetrieben. Die Antriebswelle 13 ist mit einem Pumpenrad 14 des hydrodynamischen Wandlers 2, welcher des weiteren ein Turbinenrad 15 und ein Leitrad 16 aufweist, drehfest verbunden. Parallel zu dem hydrodynamischen Wandler 2 ist eine Wandlerkupplung 17 angeordnet. Die Wandlerkupplung 17 und das Turbinenrad 15 führen auf eine Turbinenwelle 18, wobei die Turbinenwelle 18 bei betätigter Wandlerkupplung 17 die gleiche Drehzahl wie die Antriebswelle 13 aufweist. Neben dem hydrodynamischen Wandler 2 und den Kupplungen bzw. Bremsen 3 bis 9 weist der mechanische Teil 1A des Automatgetriebes 1 zwei nicht näher bezeichnete Freiläufe und drei hintereinander angeordnete Planetenradsätze 19, 20 und 21 auf. Als Abtrieb ist bei dem Automatgetriebe 1 eine Getriebeausgangswelle 22 ausgebildet, welche auf ein nicht dargestelltes Differential führt, das über zwei Achshalbwellen - ebenfalls nicht dargestellte - Antriebsräder eines Fahrzeugs antreibt. Die Auswahl einer Gangstufe erfolgt über eine entsprechende Kupplungs-/Brems-Kombination. Da die beschriebenen Elemente des Automatgetriebes 1 für das weitere Verständnis der Erfindung nicht weiter von Bedeutung sind, wird an dieser Stelle nicht näher darauf eingegangen.

Von dem mechanischen Teil 1A des Automatgetriebes 1 zu dem elektronischen Steuergerät 11 führt eine Leitung 23 zur Übertragung eines Turbinendrehzahl-Signales, welches von einer Meßeinrichtung 24 an der Turbinenwelle 18 erzeugt wird, und eine Leitung 25 zur Übertragung eines Getriebeausgangsdrehzahl-Signales, das von einer Meßeinrichtung 26 an der Getriebeausgangswelle 22 erzeugt wird. Neben dem Getriebeausgangsdrehzahl-Signal und dem Turbinendrehzahl-Signal werden von einem die Brennkraftmaschine 12 steuernden Motorsteuergerät 27, welches in der Fig. 1 symbolhaft angedeutet ist, weitere Eingangsgrößen wie z. B. das Signal einer Drosselklappe, das Signal eines von der Brennkraftmaschine 12 abgegebenen Momentes M_M, die Drehzahl n_M der Brennkraftmaschine 12, eine Temperatur des Motors und des Hydraulikfluids des Automatgetriebes 1 sowie Raddrehzahlen n_Rad an das elektronische Steuergerät 11 übermittelt. In Abhängigkeit dieser Eingangsgrößen wählt das elektronische Steuergerät 11 über das hydraulische Steuergerät 10 eine entsprechende Gangstufe aus.

Das elektronische Steuergerät 11, welches in der Fig. 1 äußerst schematisiert dargestellt ist, weist hierzu einen Micro-Controller 28, eine Speichereinrichtung 29, eine Berechnungseinheit 30 zur Ermittlung des Fahrertyps und eine Steuerungseinrichtung 31 auf. Dabei sind in der Speichereinrichtung 29, welche zweckmäßigerweise als EProm, EEProm oder als gepufferter RAM ausgeführt ist, die getrieberelevanten Daten, zu denen beispielsweise Programme und Daten sowie Diagnosedaten zählen, abgelegt. Die Steuerungseinrichtung 31 dient zur Ansteuerung von sich in dem hydraulischen Steuergerät 10 befindlichen Stellgliedern 32, welche zur Druckbeaufschlagung der Kupplungen bzw. Bremsen 3 bis 9 vorgesehen sind, wie durch die Pfeile 33 symbolhaft in Fig. 1 angedeutet ist.

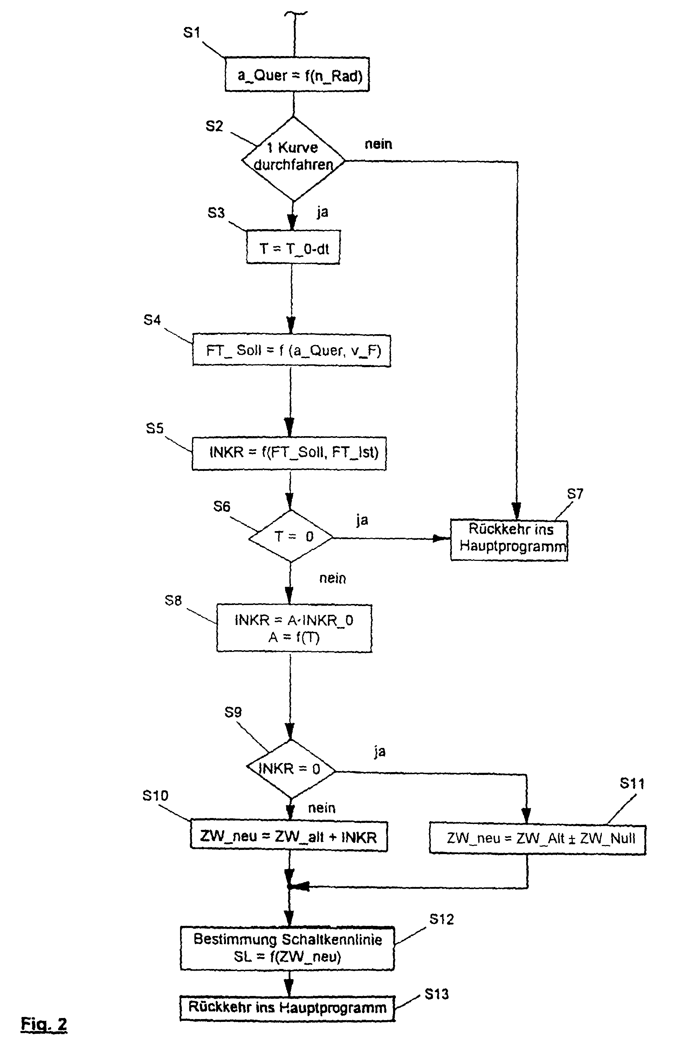

Bezug nehmend auf Fig. 2 ist ein Programmablaufplan für ein Unterprogramm zur Bewertung einer Kurvenfahrt dargestellt. Zu Beginn wird eine von einer Meßeinrichtung 34 ermittelte Raddrehzahl n_Rad an eine erste Verarbeitungsfunktion S1 der Berechnungseinheit 30 zur Ermittlung eines Fahrertyps ausgegeben. Die Verarbeitungsfunktion S1 liefert durch eine Berechnung aus den Raddrehzahlen n_Rad eine Querbeschleunigung a_Quer des Fahrzeuges. In einer nachfolgenden Unterscheidungsfunktion S2 wird geprüft, ob eine erste Kurve durchfahren wurde. Falls dies nicht der Fall ist, verzweigt das Programm zur Rückkehr in ein Hauptprogramm zu einer Verarbeitungsfunktion S7. Wurde jedoch eine Kurve durchfahren, wird von der Unterscheidungsfunktion S2 eine Verarbeitungsfunktion S3 aktiviert, in der nach Verlassen der ersten durchfahrenen Kurve eine vordefinierte Zeit T gestartet. Bei der Zeit T handelt es sich um eine Zeitstufe, welche derart gebildet wird, daß von einem Anfangswert T_0 ein Zeitbetrag dt einer laufenden Zeit t abgezogen wird. Mathematisch betrachtet stellt die vordefinierte Zeit T somit eine Differenz eines Anfangswertes T_0 minus des Zeitbetrages dt dar.

In einer weiteren Verarbeitungsfunktion S4 wird aus der Fahrzeugquerbeschleunigung a_Quer und einer Fahrzeuggeschwindigkeit v_F ein Fahrertyp-Sollwert FT_Soll bestimmt. eDie Fahrzeuggeschwindigkeit v_F wird dabei aus einer an der Antriebswelle 22 des Automatgetriebes 1 gemessenen Getriebeausgangsdrehzahl n_AB von der Berechnungseinheit 30 ermittelt. In einer nachfolgenden Verarbeitungsfunktion S5 wird durch einen Vergleich des Fahrertyp-Sollwertes FT_Soll mit einem Fahrertyp-Istwert FT_Ist ein erstes Inkrement INKR_0 bestimmt.

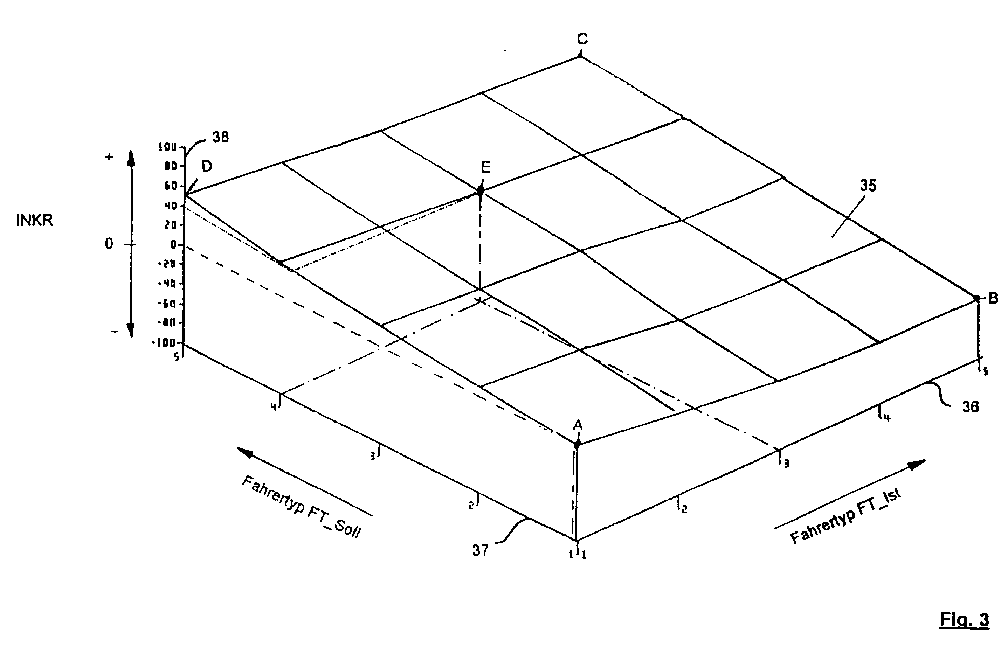

Bezug nehmend auf Fig. 3 ist ein vorgegebenes Kennfeld 35 dargestellt, welches die Abhängigkeit zwischen dem Fahrertyp-Sollwert FT_Soll, dem Fahrertyp-Istwert FT_Ist und dem ersten Inkrement INKR_0 bestimmt, und zur Ermittlung des Inkrementes INKR_0 in der Verarbeitungsfunktion S5 dient. Dabei ist der Fahrertyp-Istwert FT_Ist auf einer ersten Achse 36, der Fahrertyp-Sollwert FT_Soll auf einer zweiten Achse 37 und das Inkrement INKR auf einer dritten Achse 38 aufgetragen. In dem Kennfeld 35 liegt eine Fläche mit den Endpunkten A, B, C und D.

Zur Ermittlung des Inkrementes INKR_0 wird zunächst der Fahrertyp-Sollwert FT_Soll und der Fahrertyp-Istwert FT_Ist bestimmt. Aus dem Schnittpunkt dieser beiden Werte in dem Kennfeld 35 ergibt sich das zugehörige Inkrement INKR_0 an der Achse 38.

In Fig. 3 sind zwei Beispiele zur Ermittlung eines Inkrementes INKR_0 ersichtlich, wobei das erste Beispiel durch gestrichelte Linien und das zweite Beispiel durch strichpunktierte Linien dargestellt ist.

In dem ersten Beispiel wird der Fahrertyp-Sollwert FT_Soll mit dem Wert eins und der Fahrertyp-Istwert FT_Ist ebenfalls mit dem Wert eins bestimmt. Als Schnittpunkt ergibt sich der Eckpunkt A, dem der Wert Null des Inkrementes INKR_0 zugeordnet ist.

In dem zweiten Beispiel wird ein Fahrertyp-Sollwert FT_Soll von vier und ein Fahrertyp-Istwert FT_Ist von drei aufgetragen. Daraus ergibt sich in dem Kennfeld 35 ein Schnittpunkt E, dem auf der Achse 38 der Wert 40 des Inkrementes INKR_0 zugeordnet ist.

Nach Ermittlung des ersten Inkrementes INKR_0 wird in einer Unterscheidungsfunktion S6 geprüft, ob die Zeit T nun gleich dem Wert 0 ist, da die Unterscheidungsfunktion 6 dadurch erkennt, daß die Zeit T abgelaufen ist, d. h. daß die Zeitstufe den Endwert von 0 erreicht hat. Wenn die Zeit T abgelaufen ist, bedeutet dies, daß in der Zeit T keine weitere Kurve durchfahren wurde. Die Unterscheidungsfunktion S6 aktiviert in diesem Fall die Verarbeitungsfunktion S7 zur Rückkehr in das Hauptprogramm. Falls die Zeit T jedoch ungleich einem Nullwert ist, was bedeutet, daß die Zeitstufe den Endwert von 0 noch nicht erreicht hat, wird zur zusätzlichen Bewertung des aus der ersten Kurvenfahrt ermittelten ersten Inkrementes INKR_0 eine weitere Verarbeitungsfunktion S8 aktiviert, in der zur Ermittlung eines zweiten Inkrementes INKR das erste Inkrement INKR_0 mit einem von der abgelaufenen Zeit der vordefinierten Zeit T abhängigen Faktor A gewichtet wird. Das Inkrement INKR stellt somit mathematisch betrachtet ein Produkt des ersten Inkrementes INKR_0 und des Faktors A, dar. Der Wert des zweiten Inkrementes INKR nähert sich um so mehr dem Wert des ersten Inkrementes INKR_0, je länger die Zeit T bereits läuft. Ist die Zeit T zu 100 % abgelaufen, so wird das erste Inkrement INKR_0 zu 100 % berücksichtigt, da der Faktor A dem Wert 1 entspricht.

In einer Unterscheidungsfunktion S9 wird nun geprüft, ob das zweite Inkrement INKR gleich dem Nullwert ist.

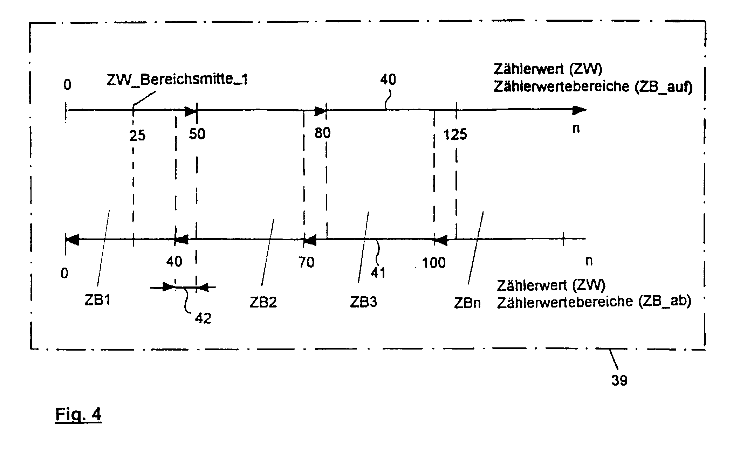

Entsprechend dem Ergebnis, das die Unterscheidungsfunktion S9 liefert, wird ein in Fig. 4 dargestellter Zähler 39 mit Zählerwerten ZW, die in definierte, einem bestimmten Fahrertyp bzw. Kurvenfahrstil zugeordnete Zählerwertbereiche ZB unterteilt sind, eingestellt. Der Zähler 39 weist einen Hochzähler 40 und einen Runterzähler 41 auf, welche symbolhaft als parallel zueinander verlaufende Zahlenstrahle dargestellt sind. Der Hochzähler 40 beginnt mit dem Wert Null und steigt kontinuierlich an bis zu einem Zählerwert ZW von n, und der in entgegengesetzte Richtung verlaufende Runterzähler 41 beginnt mit dem Zählerwert von n und steigt kontinuierlich ab bis zu dem Zählerwert Null.

Die Intervalle zwischen den Zählerwerten ZW sind bei dem Hochzähler 40 und dem Runterzähler 41 identisch, so daß sich die Zählerwerte des Hochzählers 40 und des Runterzählers 41 überdecken. Die Zählerwerte sind in n-Zählerwertebereiche aufgeteilt, wobei die Intervalle eines Zählerwertebereiches ZB_auf bei dem Hochzähler 40 und die eines Zählerwertebereiches ZB_ab bei dem Runterzähler 41 übereinstimmen. Die Zählerwertebereiche ZB_auf und ZB_ab sind jedoch zueinander um eine bestimmte Anzahl an Zählerwerten ZW, in dem Beispiel nach Fig. 4 um zehn Zählerwerte, versetzt. Der erste Zählerwertebereich ZB_auf_1 des Hochzählers 40 beginnt gemäß Fig. 4 mit dem Zählerstand Null und endet bei dem Zählerwert 50. Der zweite Zählerwertebereich ZB_auf_2 des Hochzählers 40 beginnt bei dem Zählerwert 50 und endet bei dem Zählerwert 80. Dagegen beginnt in dem vorliegenden Beispiel der Zählerwertebereich ZB_ab_1 des Runterzählers 41 mit dem Zählerwert 40 und endet bei dem Zählerstand Null. Der zweite Zählerwertebereich ZB_ab_2 des Runterzählers 41 beginnt bei dem Zählerwert 70 und endet bei dem Zählerwert 40. Die Zählerwertebereiche ZB_auf, ZB_ab stellen Sportlichkeitsstufen eines Fahrertyps bzw. Fahrverhaltens dar, wobei mit aufsteigender Zahl des Zählerwertebereiches ZB_auf bzw. ZB_ab die Sportlichkeit der Bewegung eines Fahrzeugs höher eingeschätzt wird. Zwischen zwei korrelierenden Zählerwertebereichen ZB_auf_n und ZB_ab_n ergeben sich in den Grenzbereichen Überschneidungszonen 42 aufgrund der Versetzung der Zählerwertebereiche ZB_auf und ZB_ab zueinander. Die Breite einer Überschneidungszone 42 entspricht dem Zählerwerte-Intervall, um das die Zählerwertebereiche zueinander versetzt sind, d.h. die Überschneidungszone 42 in dem Beispiel nach Fig. 4 weist eine Breite von zehn Zählerwerten auf. Die Überschneidungszonen 42 stellen dabei Beruhigungszonen dar.

Liefert die Unterscheidungsfunktion S9 nach Fig. 2 das Ergebnis, daß das Inkrement INKR gleich Null ist, d. h., daß der Fahrertyp-Sollwert FT_Soll und der Fahrertyp-Istwert FT_Ist identisch sind, so wird in einer Verarbeitungsfunktion S11 der neue Zählerwert gemäß der Beziehung ZW_Neu = ZW_Alt +/- ZW_Null bestimmt. Dies bedeutet, daß der Zähler ZW_Neu auf die Bereichsmitte geführt wird, wobei sich das Vorzeichen des Terms ZW_Null daraus ergibt, ob der alte Zählerwert ZW_Alt größer oder kleiner der Bereichsmitte ist.

In Fig. 4 ist beispielhaft hierfür ein Zählerwert ZW_Bereichsmitte des Zählerwertbereiches ZB_auf_1 bzw. ZB_ab_1 eingezeichnet, dessen Zählerwert 25 beträgt.

Gibt die Unterscheidungsfunktion S9 das Ergebnis aus, daß das Inkrement größer oder kleiner Null ist, d. h., daß der Fahrertyp-Sollwert FT_Soll und Fahrertyp-Istwert FT_Ist voneinander abweichen, wird in einer Verarbeitungsfunktion S10 ein Summand aus einem vorhergehenden Zählerwert ZW_Alt und dem Inkrement INKR als neuer Zählerwert ZW_Neu bestimmt und der Zähler 39 dementsprechend eingestellt.

Der Zähler 39 wird somit in Abhängigkeit der Fahrsituation direkt ohne Filterung in- bzw. dekrementiert oder bei Übereinstimmung von Fahrertyp-Istwert FT_Ist und Fahrertyp-Sollwert FT_Soll auf die Mitte eines Zählerwertebereiches gesetzt.

In einer Verarbeitungsfunktion S12 wird dem neuen Zählerwert ZW_Neu eine Schaltkennlinie SL aus einer Vielzahl von Schaltkennlinien, die jeweils für einen bestimmten Fahrertyp in Abhängigkeit vom Straßenverlauf bzw. Kurvenfahrstil geeignet sind, zugeordnet, und es erfolgt über das Inkrement INKR die Auswahl einer dem Fahrertyp entsprechenden Schaltkennlinie mit hohen oder tiefen Schaltpunkten.

Danach wird über eine Verarbeitungsfunktion S13 in das Hauptprogramm zurückgekehrt.

### Bezugszeichen

- 1: Automatgetriebe
- 1A: mechanischer Teil des Automatgetriebes
- 1B: Steuerungsteil des Automatgetriebes
- 2: hydrodynamischer Wandler
- 3: Schaltelement
- 4: Schaltelement
- 5: Schaltelement
- 6: Schaltelement
- 7: Schaltelement
- 8: Schaltelement
- 9: Schaltelement
- 10: hydraulisches Getriebesteuergerät
- 11: elektronisches Getriebesteuergerät
- 12: Antriebseinheit
- 13: Antriebswelle
- 14: Pumpenrad
- 15: Turbinenrad
- 16: Leitrad
- 17: Wandlerkupplung
- 18: Turbinenwelle
- 19: erster Planetenradsatz
- 20: zweiter Planetenradsatz
- 21: dritter Planetenradsatz
- 22: Getriebeausgangswelle
- 23: Turbinendrehzahl-Signal-Leitung
- 24: Turbinendrehzahl-Meßeinrichtung
- 25: Getriebeausgangsdrehzahl-Signal-Leitung
- 26: Getriebeausgangsdrehzahl-Meßeinrichtung
- 27: Motorsteuergerät
- 28: Micro-Controller
- 29: Speicher
- 30: Berechnungseinheit
- 31: Steuerungseinrichtung
- 32: Stellglied
- 33: Druckbeaufschlagungs-Pfeil
- 34: Raddrehzahl-Meßeinrichtung
- 35: Kennfeld
- 36: erste Achse des Kennfeldes
- 37: zweite Achse des Kennfeldes
- 38: dritte Achse des Kennfeldes
- 39: Zähler
- 40: Zahlenstrahl Hochzähler
- 41: Zahlenstrahl Runterzähler
- 42: Überschneidungszone

## Patentansprüche

1. Verfahren zur Bewertung eines Straßenverlaufes bei einem Automatgetriebe eines Fahrzeuges mittels eines elektronischen Getriebesteuergerätes mit einer Berechnungseinheit, einem Micro-Controller, einer Speichereinrichtung und einer Steuerungseinrichtung zur Ansteuerung eines hydraulischen Getriebesteuergerätes, **gekennzeichnet** durch die Verfahrensschritte:
1. aus von einer Meßeinrichtung (34) an Rädern des Fahrzeuges gemessenen Raddrehzahlen (n_Rad) wird von der Berechnungseinheit (30) eine Querbeschleunigung (a_Quer) des Fahrzeuges zur Kurvenbewertung ermittelt,
2. in einer Unterscheidungsfunktion (S2) wird geprüft, ob eine erste Kurve durchfahren ist, und falls ja, wird in einer Verarbeitungsfunktion (S3) eine vordefinierte Zeit (T) gestartet,
3. aus der Fahrzeugquerbeschleunigung (a_Quer) und einer Fahrzeuggeschwindigkeit (v_F) wird ein Fahrertyp-Sollwert (FT_Soll) und ein erstes Inkrement (INKR_0) zwischen diesem und einem Fahrertyp-Istwert (FT_Ist) bestimmt,
4. in einer Unterscheidungsfunktion (S6) wird zur Ermittlung, ob in der vordefinierten Zeit (T) eine weitere Kurve durchfahren ist, geprüft, ob die Zeit (T) abgelaufen ist, und falls nein, wird eine Verarbeitungsfunktion (S8) zur Ermittlung eines zweiten Inkrementes (INKR), das gegenüber dem ersten Inkrement (INKR_0) mit einem von einer abgelaufenen Zeit der vordefinierten Zeit (T) abhängigen Faktor (A) gewichtet ist, aktiviert,
5. aus dem zweiten Inkrement (INKR) wird eine Schaltkennlinie (SL) aus mehreren jeweils einem bestimmten Fahrertyp zugeordneten Schaltkennlinien ermittelt.

2. Verfahren nach Anspruch 1, dadurch **gekennzeichnet**, daß die vordefinierte Zeit (T) eine von einem Anfangswert (T_0) um einen Zeitbetrag (dt) verringerte Zeitstufe darstellt.

3. Verfahren nach Anspruch 1 und 2, dadurch **gekennzeichnet**, daß die Unterscheidungsfunktion (S6) die Zeit (T) als abgelaufen erkennt, wenn der Wert der Zeit (T) gleich einem Nullwert ist.

4. Verfahren nach einem der Ansprüche 1 bis 3, dadurch **gekennzeichnet**, daß eine Verarbeitungsfunktion (S7) zur Rückkehr in ein Hauptprogramm gestartet wird, wenn in der Unterscheidungsfunktion (S2) festgestellt wird, daß eine erste Kurve nicht durchfahren ist, oder wenn in in der Unterscheidungsfunktion (S6) festgestellt wird, daß die vordefinierte Zeit (T) abgelaufen ist.

5. Verfahren nach einem der Ansprüche 1 bis 4, dadurch **gekennzeichnet**, daß die Fahrzeuggeschwindigkeit (v_F) aus einer an einer Getriebeausgangswelle (22) gemessenen Getriebeausgangsdrehzahl (n_AB) von der Berechnungseinheit (30) ermittelt wird.

6. Verfahren nach einem der Ansprüche 1 bis 5, dadurch **gekennzeichnet**, daß das erste Inkrement (INKR_0) in einer Verarbeitungsfunktion (S5) aus einem vorgegebenen Kennfeld (35), welches die Abhängigkeit zwischen dem Fahrertyp-Sollwert (FT_Soll), dem Fahrertyp-Istwert (FT_Ist) und dem ersten Inkrement (INKR_0) bestimmt, ermittelt wird.

7. Verfahren nach einem der Ansprüche 1 bis 6, dadurch **gekennzeichnet**, daß zur Ermittlung der Schaltkennlinie (SL) aus dem zweiten Inkrement (INKR)
1. das Inkrement (INKR) an eine Unterscheidungsfunktion (S9) ausgegeben wird, zur Feststellung, ob das Inkrement (INKR) gleich einem Nullwert ist und falls ja, ein Zähler (39) mit Zählerwerten (ZW), die in definierte, einem bestimmten Fahrertyp bzw. Kurvenfahrstil zugeordnete Zählerwertebereiche (ZB_auf, ZB_ab) unterteilt sind, derart eingestellt wird, daß als neuer Zählerwert (ZW_Neu) gemäß der Funktion ZW_Neu = ZW_Alt +/- ZW_Null in einer Verarbeitungsfunktion (S11) bestimmt wird und
falls das Inkrement (INKR) größer oder kleiner Null ist, in einer Verarbeitungsfunktion (S10) ein Summand aus einem vorhergehenden Zählerwert (ZW_Alt) und dem Inkrement (INKR) als neuer Zählerwert (ZW_Neu) bestimmt wird,
2. in einer Verarbeitungsfunktion (S12) wird dem neuen Zählerwert (ZW_Neu) eine Schaltkennlinie (SL) zugeordnet und eine Verarbeitungsfunktion (S13) zur Rückkehr in das Hauptprogramm gestartet.

8. Verfahren nach Anspruch 7, dadurch **gekennzeichnet**, daß die Zählerwertebereiche (ZB_auf, ZB_ab) des Zählers (39) in ihren Grenzbereichen Überschneidungszonen (42) aufweisen.

## Claims

1. Process for evaluating a road contour in connection with an automatic transmission of a vehicle by means of an electronic transmission-control instrument with a calculating unit, a microcontroller, a memory device and a control device for controlling a hydraulic transmission-control instrument, characterised by the following process steps:
1. from wheel speeds (n_wheel) measured by a measuring device (34) on wheels of the vehicle a transverse acceleration (a_trans) of the vehicle is ascertained by the calculating unit (30) with a view to evaluating a bend,
2. in a discriminating function (S2) a check is performed as to whether a first bend has been negotiated, and if yes then a predefined time (T) is started in a processing function (S3),
3. from the transverse acceleration (a_trans) of the vehicle and a vehicle speed (v_V) a driver-type set value (FT_set) and a first increment (INCR_0) between said set value and a driver-type actual value (FT_act) are determined,
4. with a view to ascertaining whether another bend has been negotiated in the predefined time (T), in a discriminating function (S6) a check is performed as to whether the time (T) has elapsed, and if no then a processing function (S8) for ascertaining a second increment (INCR) which in comparison with the first increment (INCR_0) is weighted by a factor (A) which is dependent on an expired time of the predefined time (T) is activated,
5. from the second increment (INCR) a shift characteristic (SC) is ascertained from several shift characteristics which are each assigned to a particular driver-type.

2. Process according to Claim 1, characterised in that the predefined time (T) represents a time stage which is diminished from an initial value (T_0) by an amount of time (dt).

3. Process according to Claims 1 and 2, characterised in that the discriminating function (S6) recognises the time (T) as elapsed if the value of the time (T) is equal to a value of zero.

4. Process according to any one of Claims 1 to 3, characterised in that a processing function (S7) is started with a view to returning to a main program if it is established in the discriminating function (S2) that a first bend has not been negotiated or if it is established in the discriminating function (S6) that the predefined time (T) has elapsed.

5. Process according to any one of Claims 1 to 4, characterised in that the vehicle speed (v_V) is ascertained by the calculating unit (30) from a transmission output speed (n_OC) measured on a transmission output shaft (22).

6. Process according to any one of Claims 1 to 5, characterised in that the first increment (INCR_0) is ascertained in a processing function (S5) from a predetermined characteristic field (35) which determines the dependency between the driver-type set value (FT_set), the driver-type actual value (FT_act) and the first increment (INCR_0).

7. Process according to any one of Claims 1 to 6, characterised in that with a view to ascertaining the shift characteristic (SC) from the second increment (INCR)
1. the increment (INCR) is output to a discriminating function (S9) with a view to establishing whether the increment (INCR) is equal to a value of zero, and if yes then a counter (39) with counter values (CV) which are subdivided into defined counter-value ranges (CR_up, CR_down) assigned to a particular driver-type or style of cornering is set in such a way that by way of new counter value (CV_new) is determined in a processing function (S11) in accordance with the function CV_new = CV_old ± CV_zero and if the increment (INCR) is greater than or less than zero, a summand is determined by way of new counter value (CV_new) in a processing function (S10) from a preceding counter value (CV_old) and the increment (INCR),
2. in a processing function (S12) a shift characteristic (SC) is assigned to the new counter value (CV_new) and a processing function (S13) is started with a view to returning to the main program.

8. Process according to Claim 7, characterised in that the counter-value ranges (CR_up, CR_down) of the counter (39) exhibit overlapping zones (42) in their limiting ranges.

## Revendications

1. Procédé d'évaluation d'un tracé de route pour une boîte automatique d'un véhicule au moyen d'un appareil de commande électronique pour la boîte de vitesses comportant une unité de calcul, un micro-contrôleur, un dispositif de mémoire et un dispositif de commande pour commander un appareil de commande d'une boîte de vitesses hydraulique, **caractérisé** par les étapes de procédé suivantes :
1. à partir d'un nombre de tours de rotation de roue (n_Rad) mesuré par une installation de mesure (34) sur les roues du véhicule, l'unité de calcul (30) détermine une accélération transversale (a_Quer) du véhicule pour l'évaluation des virages,
2. dans une fonction différentielle (S2), il est vérifié si un premier virage a été passé, et dans l'affirmative, un temps prédéfini (T) est démarré dans une fonction de traitement (S3),
3. à partir de l'accélération du véhicule (a_Quer) et d'une vitesse du véhicule (v_F), une valeur de consigne du type de conducteur (FT_Soll) et un premier incrément (INKR_0) entre celle-ci et la valeur réelle du type de conducteur (FT_Ist) est définie,
4. pour déterminer si un autre virage a été passé dans le temps prédéfini (T), il est vérifié dans une fonction différentielle (S6) si le temps T est écoulé, et dans le cas contraire, une fonction de traitement (S8) pour déterminer un deuxième incrément (INKR) est activé, lequel est pondéré par rapport au premier incrément (INKR_0) avec un facteur (A) dépendant d'un temps écoulé du temps prédéfini (T),
5. à partir du deuxième incrément (INKR) est déterminée une caractéristique de commande (SL) sur la base de plusieurs caractéristiques de commande affectées à un certain type de conducteur.

2. Procédé selon la revendication 1, **caractérisé** en ce que le temps prédéfini (T) représente un échelon de temps (T_0) d'une valeur initiale diminuée d'un montant de temps (dt)

3. Procédé selon les revendications 1 et 2, **caractérisé** en ce que la fonction différentielle (S6) reconnaît le temps (T) comme étant écoulé lorsque la valeur du temps (T) est égale à une valeur zéro.

4. Procédé selon l'une des revendications 1 à 3, **caractérisé** en ce qu'une fonction de traitement (S7) pour le retour dans un programme principal est démarrée lorsque dans la fonction différentielle (S2), il est constaté qu'un premier virage n'a pas été passé ou lorsque la dans une fonction différentielle (S6), il est constaté que le temps (T) prédéfini est écoulé.

5. Procédé selon l'une des revendications 1 à 4, **caractérisé** en ce que la vitesse du véhicule (v_F) est déterminée par l'unité de calcul (30) à partir d'une vitesse de rotation de sortie (n_AB) mesurée sur un arbre de sortie (22) de la boîte de vitesses.

6. Procédé selon l'une des revendications 1 à 5, **caractérisé** en ce que le premier incrément (INKR_0) dans une fonction de traitement (S5) est déterminé à partir d'un diagramme caractéristique (35) prédéfini, lequel définit la relation entre la valeur de consigne du type de conducteur (FT_Soll), la valeur réelle du type de conducteur (FT_Ist) et le premier incrément (INKR_0).

7. Procédé selon l'une des revendications 1 à 6, **caractérisé** en ce que pour la détermination de la ligne caractéristique du changement de vitesse (SL) à partir du deuxième incrément (INKR)
1. l'incrément (INKR) est transmis à une fonction différentielle (S9) pour constater si l'incrément (INKR) est égal à une valeur nulle et, dans l'affirmative, un compteur (39) avec des valeurs de comptage (ZW) divisées en zones de valeurs de comptage définies affectées à un certain type de conducteur, respectivement à un style de conduite dans les virages (ZB_auf, ZB_ab) est réglé de telle manière qu'une nouvelle valeur de comptage (ZW_Neu) est défini dans une fonction de traitement (S11) conformément à la relation ZW_Neu = ZW_Alt +/- ZW_Null et
si l'incrément (INKR) est supérieur ou inférieur à zéro, une opérande est définie dans une fonction de traitement (S10) à partir de la valeur de comptage précédente (ZW_Alt) et l'incrément (INKR) comme nouvelle valeur de comptage (ZW_Neu),
2. dans une fonction de traitement (S12), une caractéristique du changement de vitesse (SL) est affectée à la nouvelle valeur de comptage (ZW_Neu) et une fonction de traitement (S13) est démarrée pour le retour dans le programme principal.

8. Procédé selon la revendication 7, **caractérisé** en ce que les zones des valeurs de comptage (ZB_auf, ZB_ab) du compteur (39) présentent dans leurs zones limites des zones d'interface (42).
